# EUROPEAN PATENT APPLICATION

(11) **EP 1 338 982 A1**
(43) Date of publication of application: **27.08.2003**
(21) Application number: 02354036.2
(22) Date of filing: 26.02.2002
(51) Int. Cl.: G06F 17/30

(54) **Process for enhancing the access to resources**

(71) Applicant: Hewlett-Packard Company, Palo Alto, CA 94304 (US)
(72) Inventor: Riche, Stéphanie, 38000 Grenoble (FR); Raffaele, Eric, 31100 Toulouse (FR)
(74) Representative: Lloyd, Richard Graham

(57) **Abstract**

Process for enhancing the access to a set of resources which can be accessed via a browser (105), said process comprising:
- procuring a bookmark database (101) comprising a set of bookmark files (102), each of said bookmark files (102) being associated with a URI identifying a resource and comprising a description of a set of context items;
- monitoring the context of use of said computer and correspondingly updating a current context file (103) comprising a set of context items;
- computing from the contents of said current context file (103) a subset of said bookmark database (101) in order to derive a subset of bookmarks that are of higher relevance to the user;
- displaying said subset of bookmarks within said browser (105).

## Description

### Technical field of the invention

The invention relates to communication systems and more particularly to a process for improving the access to local or distance resources through an Internet or Intranet network.

### Background art

The constant progress of Information Handling System (IHS) technology and that of telecommunication systems, particularly with the explosion of the Internet and Intranet networks, has considerably increased the amount of information and the number of service providers which are available to the customer.

The personalization of the access to such a huge number of resources is proving essential to enable efficient use of the Internet.

Solutions have been developed in the art for rendering easier the access to this huge amount of resources and for improving the possibilities of negotiation and new services. For this purpose, agents have been proposed for allowing the customers to delegate some specific tasks to automatic modules in order to simplify part of the searching process.

US 5,877,759 assigned to Netscape Communications Corp. and entitled *Interface for user*/*agent interaction* shows a first example of a user interface which provides assistance to the client user and an interface that is centred on autonomous processing of whole tasks rather than sequences of commands.

WO 98/47250 application assigned to IBM Corp. and entitled *Apparatus and method for communicating between an intelligent agent and client computer process using disguised messages* illustrates an agent for the communication with a client and which uses a selector known by both parties to generate and interpret messages and thereby to effectively disguise confidential information transmitted in the message from third parties.

WO 98/43146 application assigned to IBM Corp., and entitled *Intelligent agent with negotiation capability and method of negotiation therewith* is another example of an improvement brought to a so-called intelligent agent.

The use of one or more profile files located within the user's machine, is a very promising field of development. A profile file is more easily updated since the customer feels more concerned about the information which he loads into his own profile file(s). Further this information continuously remains under his/her own control. When the customer permits it, the use of the information loaded into that or those profiles is of the highest interest for service providers since it can be used to enhance the personalization and the possibilities for negotiation with the customer. Practically, the profile files can be used by product/service providers who wish to propose an offer well tailored to the customer's needs. EP-A-118949 describes an example of an efficient use of a profile file by an agent which elaborates from an abstract request expressed by the customer a complex request which can be transmitted to a web server for further processing and negotiation.

In addition to the use of agents or profile files, the personalization of the access to the Internet network can also benefit from the bookmarking facility provided by web browsers. By giving each user the possibility of bookmarking the *Uniform Resource Identifier (URI),* of a given web page, every customer is allowed to build a personalized set of hierarchically arranged addresses for reaching, in a fast and convenient manner, their preferred web pages or other local or distant resources. It will be understood that URI is the generic term for all types of names and addresses that refer to objects on the World Wide Web. A URL (Universal Resource Locator) of a web page is one kind of URI.

Although the personalization and the access to the resources of the Internet network are greatly facilitated by known bookmarking techniques, their usefulness diminishes as the number of bookmarks increases.

Indeed, beyond a certain size, the user has to organize their set of bookmarks in a more or less sophisticated hierarchy for the purpose of retrieving one particular item when they wish to do so. The retrieval process for recording each individual bookmark can become time-consuming and, in any case, the success of the retrieval closely depends upon the ability of the user to be able to recall the location where they registered the one particular bookmark they are looking for. Should the latter escape the user's memory, then the usefulness of the bookmark will be lost.

Thus, there remains a need for techniques which allow easier personalization of the browser and further facilitate the retrieval of individual bookmarks when a user is browsing.

### Summary of the invention

It is an object of the present invention to provide a process for facilitating the access to the information available on a network, such as the Internet network, by means of an enhanced bookmarking technique.

This object is achieved by means of a process for improving the access via a browser to a set of local or distant resources, such as web servers for instance, said resources being defined by corresponding URI. The process employs a context engine which accesses a bookmark database containing a set of bookmark files, each bookmark file being associated with a given URI. Each bookmark file further comprises a description of a predefined set of fields or context items that are associated with corresponding events. Context items can be associated, for instance, with the hardware resources of the user's computer, to a particular document which is opened by the user in a given application software program, the current web page being displayed and more generally any kind of event or state which can be monitored within the computer and reported back to the context engine. Once the context engine is informed of the occurrence of an event change, it controls the update of a current context file and correspondingly amends the corresponding context item.

During the web surfing process, the context engine compares the current context tracked within a current context file with the contents of the different bookmark files loaded in the bookmark database for the purpose of deriving and computing an ordered list of the bookmarks or one or more sublists of said bookmarks which are more relevant in view of the current context. Once computed, the process displays the contextual bookmarks to the user for selection or actuation within the web browser.

Preferably, the bookmark files are associated with a set of context items, which are assigned a weighting value for the purpose of allowing an ordering process of the different bookmarks. Therefore, when the user is browsing, in accordance with the actual context of the computer, the browser presents an ordered set of bookmarks.

Preferably, the process of creation of a bookmark involves the steps of:
- detecting a bookmarking request for the user;
- reading the contents of the current context file;
- creating a bookmark file associated with said URI with a contents derived from the contents of said current context file.

The context engine can then derive from the bookmark files an ordered list of bookmarks which are computed in accordance with the contents of said current context file and which is used for generating a contextual bookmark feature.

In one embodiment, at the creation of the bookmark file, each context item is assigned a particular numerical default weight value which is used for the purpose of ordering the different bookmarks in accordance with the context of use of the computer.

In one embodiment, there is provided a process for automatically flagging a page being displayed within a web browser, said process involving the steps of:
- creating and maintaining a current context file containing a description of a set of context items which are being monitored;
- creating, in response to the user flagging one current web page being displayed, a bookmark file which comprises a copy or a sub list of the elements existing within said current context file;
- controlling automatically the displaying of said flagged bookmark when the context monitored within said current context file is close to the description existing with said bookmark file.

More generally the invention provides a technique for creating bookmarks attached with context information so that bookmarked information is easily retrieved when the user is in a similar context. The information can be stored so that useful bookmarks can be retrieved even a long time after the bookmarking action.

Another aspect of the invention provides computer program products having program code elements for carrying out the above described processes.

### Description of the drawings

An embodiment of the invention will now be described, by way of example only, with reference to the accompanying drawings, wherein:
Figure 1 illustrates the basic architecture of a computer having improved browsing and bookmarking capabilities.
Figure 2 is a process for creating a bookmark within a database.
Figure 3 shows the process for updating the weighting of the different context items associated with one given URL.
Figure 4 illustrates the flow chart of the process for displaying a web page within the web browser.
Figure 5 shows the process of updating the context file.

### Description of the preferred embodiment of the invention

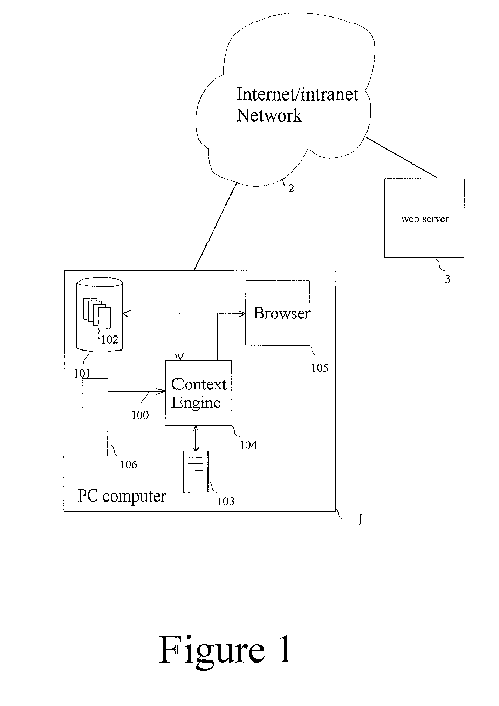

Figure 1 shows the basic architecture of a computer 1 which is fitted with a browser having improved contextual bookmarking capabilities. In the following description, the term bookmark refers to a general URI, which is, for instance, a URL of a given web page.

Computer 1 is fitted with communication resources allowing the access to a web server 3 through an Internet or Intranet network 2. A web browser 105 such as, for instance, *internet Explorer 4* or more recent (manufactured by Microsoft Corp.) or *Netscape Navigator* (manufactured by Netscape Communications Corp. , allows the handling of the communication through the standard Hyper Text Transfer Protocol (HTTP). These browsers generally permit extensions to be implemented by means of an appropriate development toolkit giving access to the Application Programming Interface (API) and it will be understood that such extensions can be used for the purpose of embodying the contextual browsing process which will be described below and for carrying out an enhanced browser.

In the preferred embodiment, the computer 1 includes a bookmark database 101 which comprise bookmarks files 102, each of which are associated with one particular URL defining one local or distant resource. Each bookmark file 102 is created by a context engine 104 upon a request from a user to bookmark a given URL when the latter is surfing with their browser, and such file contains a description of a given context arranged in a set of so-called *context items.* Preferably, each bookmark file is embodied in the form of eXtensible Mark-up Language (XML) code containing a description of a set of context items but, of course, the use of XML for embodying the bookmark files is only a matter of choice. Any other suitable format could equally be used.

In the following, the term "context" should be understood to refer to the particular background mode and environment of the computer and the user (if profile information are available) at a given time. More precisely, the context can be defined using many separate and different aspects and elements, which are hereinafter referred to as individual *context items* defining a particular aspect of the background mode of operation of the computer associated with one particular event, and the whole set of *context items* defines the global environment or context of use of the computer.

In one embodiment, one particular *context item* can define whether the computer is operated from the user's office or, in the case of a laptop computer, from her/his home.

In another embodiment, one particular *context item* can be associated with the particular physical location of the computer, such as provided, for instance, by a suitably arranged Global Positioning System (GPS) sensing device.

In another embodiment, one particular *context item* can be associated with the particular application software which is launched or being used by the user within the computer, and/or the particular files which are used by said application software program.

A further *context item* could be associated with the particular bookmark which is accessed by the user through their web browser.

A further context item can be based on the last word that was the subject of a search statement by the user in the operating system or in a given application program.

The context items which are described above should only be considered as examples for possible embodiments of the contextual bookmarking technique. However, it should be clear that the invention should not be limited to those examples - many other similar parameters could equally be used.

Computer 1 is fitted with an appropriate context item monitoring element 106 which monitors the occurrence of a particular event associated with a given context item and, correspondingly, reports this information to context engine 104 via an appropriate communication channel 100 which is based on a notification of event changes. Should there be specific software involved for retrieving the information relating to the event changes, such as for retrieving the GPS coordinates for instance, then the communication between this specific software and element 106 could be based, for instance, on an Inter Process Communication (IPC) channel - ther operation of which is generally well known.

Context item monitoring element 106 can vary to a large extent in accordance with the particular context items which are used. In one embodiment, element 106 uses the determination of the Internet Protocol (IP) address assigned to the computer for the purpose of detecting whether the computer (if, for instance, it is a laptop computer) is being used at the user's office or at home. Indeed, when connected, the computer is assigned a IP address belonging to different ranges in accordance with the particular Internet Service Provider (ISP) providing the connection to the Internet network.

In another embodiment, context item monitoring element 106 communicates with a Global Positioning System (GPS) sensing device (not shown in the figure 1) for the purpose of reporting to context engine 104 the precise physical location of the computer.

For the particular case where the computer 1 is operated under the well-known Windows 9x or Windows 2000 operating systems marketed by Microsoft, context item monitoring element 106 may include a process for accessing the internal registry for the purpose of determining which particular application programs and within said programs, which particular document or electronic files are currently open and/or being used by the user.

In accordance with the various data reported through communication channel 100, context engine 104 updates the contents of current context file 103, and more particularly the context item corresponding to a particular event or change reported. Current context file 103 can be embodied in different ways and, particularly in the registry used by the operating system. Alternatively, current context file 103 may comply with the known XML standard defined by the World Wide Web Consortium (W3C) and which is associated with a Document Type Definition (DTD) file. The DTD file defines the rules for how the elements, attributes, and other data in an XML-encoded profile are defined and logically related. In one embodiment, the XML current context file 103 recites the different context items available in the machine, and a supplementary flag representative of the activation of the latter.

Below is provided a typical example of the contents of current context file 103 based on a XML structure which comprises, among others, a first context item referring to the location where the user is physically located, a second context item which refers to the the background application and the associated files that are open etc...

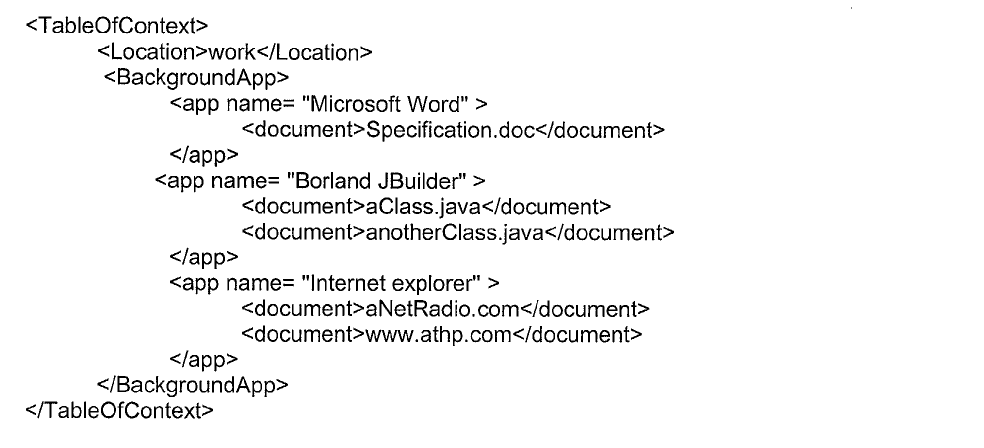

Clearly, the particular current context file 103 can be adapted for the purpose of matching particular requirements or needs.

Similarly to the XML structure described below, every bookmark file 102 also comprises a description of the context items which are associated with one given web page, or more generally to one given bookmark. In one embodiment, each context item is further assigned a particular digital value which is used as a weight for the purpose of allowing computation possibilities of the different bookmark files, and more particularly the relevance of those with respect to a given context for the purpose of computing an ordered list of bookmarks in view of a given context.

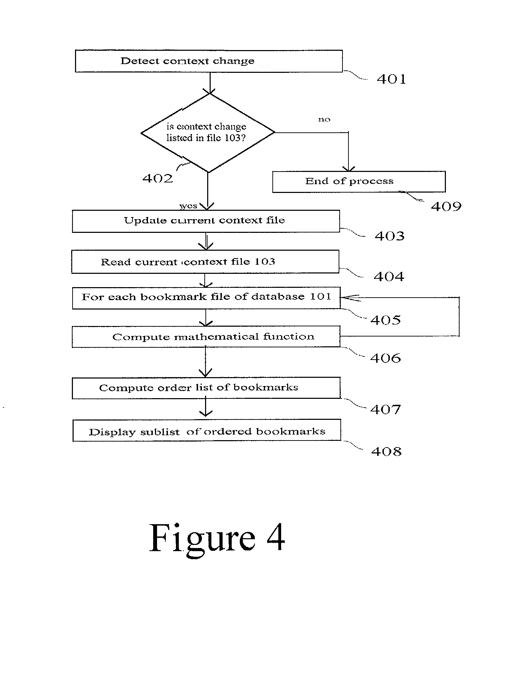

The bookmark files 102 are created and maintained by means of context engine 104 which receives and processes the information conveyed through communication channel 100 and which serves for interfacing with a browser 105 allowing access to the Internet network, or an Intranet network for instance. In the preferred embodiment, the graphical user interface (GUI) of browser 105 is enriched, via an appropriate development tool that may, for instance, be offered by the browser manufacturer as explained above, with an additional tool bar which provides for the display of a set of contextual bookmarks which are automatically displayed in accordance with the process which is described hereinafter with reference to figure 4.

There will now be described the particular processes which are used for creating and maintaining the bookmark files 102 of bookmark database 101 and for using those for controlling the displaying within browser 105 of a contextual set of bookmarks.

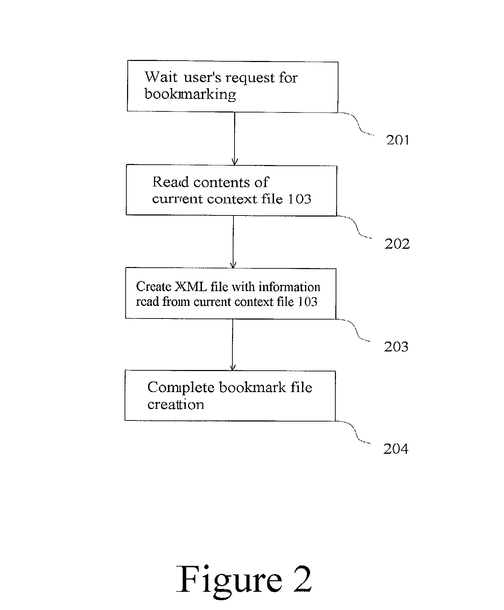

Figure 2 more particularly illustrates the creation of one bookmark file in database 101 upon request of a user.

The bookmark creation process starts with a step 201 where context engine 104 waits upon a user's request to bookmark a given web page which is currently displayed by web browser 105. In one embodiment, the detection can be achieved by means of a specific menu item appearing in the menu toolbar of the browser.

In response to the detection of a bookmarking request from the user, the contextual engine reads the contents of the current context file 103 in a step 202.

In a step 203, the context engine 104 creates a XML file which is associated with the web page or other resource corresponding to the considered URL or URI and to the name of that page (provided by the page itself by default), and writes within said new XML file the contents of the information read from the current context file 103. In addition, context engine 104 assigns to each context item referred to within said XML file a numerical value corresponding to a given predefined weight. Alternatively, it should be understood that the way of assigning the weight to the particular context item being considered can be varied. For instance, assuming that one particular application is launched and one particular document is opened, in one embodiment, the document will be assigned a bookmark default weight of 100. Conversely, if the context is such that actually three different documents are opened for the same application program, the weight will be set to 33 for each document.

Below is shown an example of a XML structure which can be used for describing the context items and the weights assigned to the latter:

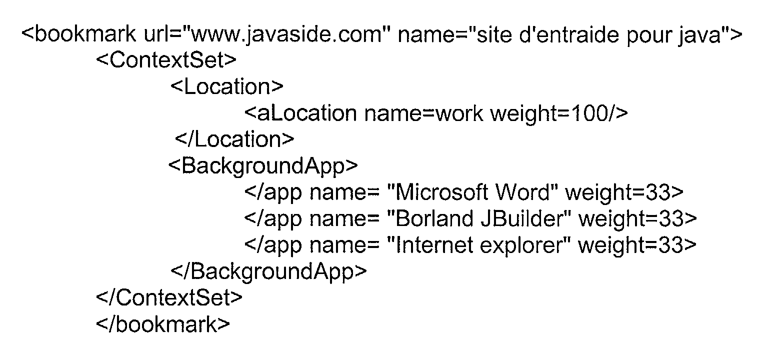

When the bookmark file is created, the process then completes in a step 204.

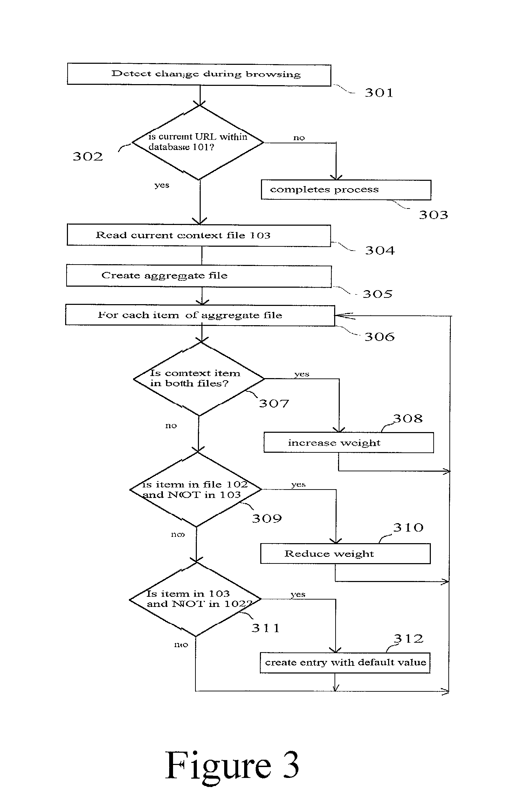

With respect to figure 3, there will now be described the process for updating and modifying the current weights assigned to the different context items arranged in a given bookmark file 102 when the user is surfing on the Internet, for instance, using web browser 105.

In a step 301, the process starts with the detection of an event or change in one context item when the user is browsing.

In a step 302, the process determines whether the current URL displayed by the browser corresponds to an XML file which is stored within the bookmark database 101.

If the current URL does not correspond to an XML file within the bookmark database 101, then the process completes in a step 303 and, conversely, the process proceeds to a step 304 where the contents of the current context file 103 is read.

In a step 305, the process creates a temporary aggregate file containing the context items existing in both the current context file 103 and the considered bookmark file 102 without any duplication.

The process then proceeds to a loop where each item of this temporary file is successively tested in a step 306.

For each context item considered, the process then proceeds to a set of three successive tests.

Step 307 corresponds to a first test where the considered context item is tested to determine whether it is listed in both the current context file 103 and the bookmark file 102, in which case the weight assigned to said context item is increased by a given value in a step 308. The process then loops back to step 306 to test the next context item of the aggregate file.

If the test of step 307 fails, then a second test is performed in a step 309 where the considered context item is tested to determine whether it is listed in bookmark file 102 and not present within current context file 103, in which case the assigned weight is decreased by a predefined number in a step 310. The process then loops back to step 306 for the purpose of testing the next context item listed within the temporary file.

If the test of step 309 fails, then the process proceeds to a step 311 which corresponds to a third test for determining whether the context item is listed in current context file 103 while not being present in bookmark file 102, in which case an entry corresponding to the considered context item is created within bookmark file 102 with a default weighting value in a step 312.

The process then loops back to step 306 for the purpose of processing the next context item.

When all the context items are processed then the process completes. It will be observed that the basic functionality described above could be implemented using much more sophisticated techniques, based for instance on the use of artificial intelligence.

With respect to figure 4, there will now be described the process for continuously controlling the display of browser 105 for the purpose of providing a contextual bookmark display process.

In a step 401 , the process detects the occurrence of an event change 100.

In a step 402, the process checks whether the detected event change is significant or listed within the current context file 103 and, in the reverse case, the process completes in a step 409.

If the event which is detected is significant or listed within the current context file, then the process proceeds to a step 403 where the current context file is updated.

In a step 404, the context engine then reads the current context file 103.

In a step 405, the context engine performs a loop for successively processing each bookmark file 102 of said bookmark database 101.

For each considered bookmark file 102, the process then compares in a step 406 the contents of current context file 103 with the context items recited within this bookmark file 102. This comparison permits a mathematical function to be computed of the different weights assigned to each item in accordance with the activation of said item reported within said current context file 103. The context engine 104 then produces a final result corresponding the bookmark relevance factor which is representative of the convenience of said bookmark .

The process then proceeds back to loop 405 for the purpose of processing the next bookmark file 102.

When all the weights are computed, the process then computes in a step 407 a list of bookmarks which are ordered in accordance with their computed weights and eventually, in a step 408, controls the display of the web browser in accordance with said bookmark weights.

It can be seen the user is then automatically displayed the web page they are interested in, and additionally is presented with the possibility of additional hyperlinks corresponding to alternate bookmarks which are contextually related to this web page.

In one preferred embodiment, the context engine 104 takes advantage of the result of the computation performed above for the purpose of computing a subset of bookmarks contained within said bookmark files which are displayed to the user through the browser 105.

There is therefore provided a very effective contextual bookmarking facility which substantially enhances the personalization of the browser 105 and the possibility of accessing the information available through the Internet or Intranet network. Hereinafter there is provided some examples of such contextual environment, which are not limitative. For instance assuming that one user is developing a piece of software using the java language, for instance, the user could be well interesting in gathering some basic information and references relating to this particular topic. In this case, a useful context item could comprise the name of the development environment or application for creating the java code, the version of the java development tool, and possibly, the last word which was used by the user in the help menu. Therefore, if a user is working on the development of a java piece of code, the context item could refer to the last java instruction for which he requested some help, and also to the development environment referring to java.

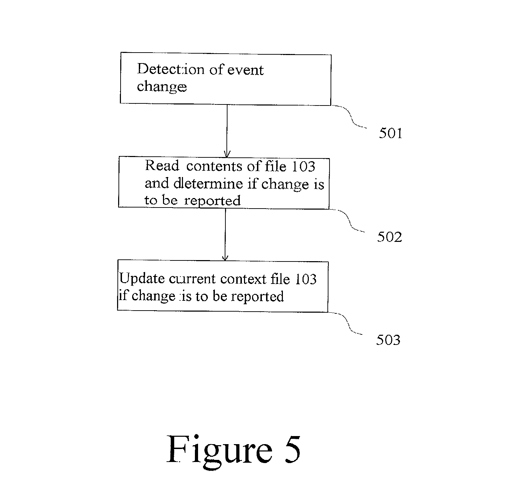

With respect to figure 5, there will now be described the process which allows the maintenance of the current context file.

The process starts with a step 501 which consists in the detection of a event change. The event change detected can be varied in accordance with the particularly requirements of the user.

In a step 502, the process reads the contents of current context file 103 for the purpose of determining whether the current change is to be reported within said context file 103.

If the event change corresponding to an item recited within the current context file 103, then the corresponding item of the current context file 103 is updated in a step 503.

While the process which was described above shows an enhanced bookmarking technique allowing the user to improve the presentation of the bookmarks , it should be observed that the bookmark database 101 can even be used for the purpose of creating a special mechanism allowing the user to flag a particular page - without requiring any formal bookmarking - which flagging operation automatically creates a corresponding bookmark file 102 associated with this particular URI or URL address. By continuously comparing the contents of current context file 103 and the different context items of the bookmark file 102, the process can automatically control the display of very ancient URLs or URIs which were once flagged by the user at a similar background or contextual environment.

## Claims

1. Process for enhancing the access to a set of resources which can be accessed via a browser (105), said process comprising:
- procuring a bookmark database (101) comprising a set of bookmark files (102), each of said bookmark files (102) being associated with a URI identifying a resource and comprising a description of a set of context items;
- monitoring the context of use of said computer and correspondingly updating a current context file (103) comprising a set of context items;
- computing from the contents of said current context file (103) a subset of said bookmark database (101) in order to derive a subset of bookmarks that are of higher relevance to the user;
- displaying said subset of bookmarks within said browser (105).

2. Process according to claim 1 comprising creating a new bookmark, the creating comprising:
- detecting (201) a bookmarking request for a URI;
- reading (202) the contents of the current context file (103);
- creating (203) a bookmark file (201) associated with said URI, the contents of the bookmark file being derived from the contents of said current context file.

3. Process according to claim 2 wherein said bookmark file is assigned a weight value which is used for the purpose of ordering bookmarks in accordance with the context of use of the computer.

4. Process according to any preceding claim wherein said bookmark files are embodied in the form of XML files comprising a set of context items.

5. Process according to any preceding claim wherein one context item defines the physical location of said computer, particularly distinguishing an office/home use.

6. Process according to claim 5 wherein an IP address is used to distinguish home and office use.

7. Process according to any preceding claim wherein one context item defines the particular position of the computer with respect to a physical location provided by a Global Positioning System sensing device.

8. Process according to any preceding claim wherein one context item defines the particular application software programs which are open and/or the particular documents or electronic files being used by said programs.

9. Process according to any preceding claim wherein said displaying of said sub-set of bookmarks is carried out in response to the user clicking on a specific icon being different from the icon providing the standard bookmark access.

10. Process for allowing access through an Internet or an Intranet network to a set of local or distant resources, said process involving the steps of:
- bookmarking a set of URL addresses and creating a bookmark database (101) including a set of bookmark files (102) containing a description of context items;
- detecting the occurrence of specific events and reporting said events within a current context file (103);
- computing from the contents of said current context file (103) and from the contents of said bookmark files (102) a subset of bookmarks determined as being of higher relevance;
- displaying said subset of computed bookmark as a contextual bookmark.

11. Process for controlling the displaying of a web page corresponding to a URI, said process comprising the steps of:
- creating a current context file (103) comprising a plurality of context items forming a general context and continuously updating said current context file in accordance with a monitoring of said context;
- creating a bookmark file (101) associated with said URI upon a request from the user to flag one particular page being browsed and storing within said bookmark file (101) the description of the context items being valid at the instant of flagging of said page;
- monitoring said current context file (103) during the browsing process for the purpose of controlling the display of said flagged page to the user when the current context file shows a context close to the description loaded within one flagged page.

12. A computer program product having program code elements for carrying out a process as claimed in any of claims 1 to 11.
